# EUROPEAN PATENT APPLICATION

(11) **EP 4 169 675 A1**
(43) Date of publication of application: **26.04.2023**
(21) Application number: 22203408.4
(22) Date of filing: 24.10.2022
(51) Int. Cl.: B25J 9/16

(54) **BUMPER FACIA PUNCHING/WELDING SYSTEM AND METHOD**

(30) Priority: 22.10.2021 US 202163270830 P
(71) Applicant: T.A. SYSTEMS, INC., Rochester Hills, MI 48309 (US)
(72) Inventor: BROWN, Theodore Robert, Birmingham, Michigan 48009 (US)
(74) Representative: Marks & Clerk LLP

(57) **Abstract**

A system includes a first fixture to support one side of a part and a robot that has a second fixture to support an opposite side of the part with respect to the one side. One of the part sides has a target on a surface that indicates a location for the operation. The system has a sensor to measure the target in 3-dimensional space. A tool performs the operation at the location, and a controller moves the robot to pick up the part from the first fixture using the second fixture. The controller presents the target to the sensor for measuring the x,y,z coordinates and the yaw, pitch and roll of the target. The controller moves the second fixture with the part to the tool based upon the measurement.

## Description

### CROSS-REFERENCE TO RELATED APPLICATIONS

This application claims priority to United States Provisional Application No. 63/270,830 filed on October 22, 2021, and is incorporated herein by reference.

### BACKGROUND

The disclosure relates to punching and/or welding operations to parts such as bumper facias.

Bumper facias are constructed from a flexible plastic having complex compound curves. Typical modern bumper facia has multiple holes punched in it to accommodate ultrasonic parking sensors and the like. Holes may be punched for other purposes as well. Various brackets are secured to a B-side of the facia by ultrasonic welding to support the sensors and other components. The intended hole locations are typical identified with markings on the B-side, such as a raised symbol, corresponding to the target for the punch. The punch must accurately shear the hole at the target to produce a quality bumper facia.

Conventional bumper facia punching and/or welding equipment is relative expensive. This is in part due to the dedicated bumper facia nests that must be built for each bumper facia and the attendant dedicating tooling for that particular bumper facia.

In operation, an operator loads a bumper into the dedicated nest, where the bumper remains stationary throughout the punching and/or welding operations. Dedicated punching and/or welding tools are provided for each location or groups of locations where an operation must occur. This requires multiple punches and/or multiple welders for every bumper. When equipment for a new bumper facia is needed, for example, at a vehicle model changeover, the entire nest and tools must be reconfigured and rebuilt.

There have been attempts to provide a more flexible robotic punching cell, but those attempts have failed because the hole locations could not be located accurately enough. A multi-axis robot was used to hold the bumper and present the various hole locations to a common punching tool. A 2D sensor with a camera and a light were provided at the punching tool. The light was positioned to shine on the target, and the 2D sensor identified the target as an x,y coordinate only and provided an offset to the robot so that it could accurately locate the bumper facie with respect to the punching tool. Nonetheless, this system did not result in an accurately located hole precisely at the target. That is, the target was not properly identified.

### SUMMARY

In one exemplary embodiment, a system for performing an operation on a part, includes a first fixture that is configured to support one side of a part, a robot that has a second fixture that is configured to support an opposite side of the part with respect to the one side. One of the part sides has a target on a surface that indicates a location for the operation. The system further includes a sensor that is configured to measure the target in 3-dimensional space, a tool that is configured to perform the operation at the location, and a controller that is configured to move the robot to pick up the part from the first fixture using the second fixture. The controller is configured to present the target to the sensor for measuring the x,y,z coordinates and the yaw, pitch and roll of the target, and the controller is configured to move the second fixture with the part to the tool based upon the measurement.

In a further embodiment of any of the above, the one side is a B-side of the part, the opposite side is the A-side of the part, and the target is located on the B-side.

In a further embodiment of any of the above, the first fixture includes multiple guide brackets that are configured to cooperate with a perimeter of the part to guide the part onto support structure. The support structure is arranged beneath the target.

In a further embodiment of any of the above, the second fixture includes suction cups that are configured to selectively attach to the A-side.

In a further embodiment of any of the above, the sensor is arranged in proximity to a base of the robot.

In a further embodiment of any of the above, the sensor includes a camera and multiple lights that are arranged at different angles in relation to the target.

In a further embodiment of any of the above, the target includes a pattern that is raised with respect to an immediately adjacent surface.

In a further embodiment of any of the above, the pattern is cross-hairs that indicate the location.

In a further embodiment of any of the above, the controller is configured to present the part to the tool at an orientation that corresponds to the yaw, pitch and roll of the target.

In a further embodiment of any of the above, the part includes multiple targets each having different curved surfaces with different characteristics.

In a further embodiment of any of the above, the controller is configured to present each of the targets to the sensor for measurement of the characteristics.

In a further embodiment of any of the above, the controller is configured to present the multiple targets to the tool for performing the operation.

In a further embodiment of any of the above, the tool is one of a punching tool and a welding tool.

In a further embodiment of any of the above, the sensor includes a camera.

In a further embodiment of any of the above, the part is a bumper facia.

In another exemplary embodiment, a method of performing an operation on a part, includes supporting a part in a first fixture, robotically picking up the part with a second fixture, and measuring a target on a curved surface of the part to determine a location of the target in 3-dimensional space. The target measuring step includes determining the x,y,z coordinates and the yaw, pitch and roll of the target. The method further includes presenting the part to a tool at an orientation that corresponds to the measured location of the target, and performing an operation at the location.

In a further embodiment of any of the above, the robotically picking step includes suctioning a side of the part opposite the side with the target.

In a further embodiment of any of the above, the measuring step includes robotically presenting the target to a camera.

In a further embodiment of any of the above, part has multiple targets, and the measuring step includes presenting the multiple targets to the camera. The performing step includes performing the operation and the location corresponds to each of the multiple targets.

In a further embodiment of any of the above, the operation is one of punching or welding.

### BRIEF DESCRIPTION OF THE DRAWINGS

The disclosure can be further understood by reference to the following detailed description when considered in connection with the accompanying drawings wherein:
Figure 1 schematically illustrates a system for punching and/or welding a bumper facia.

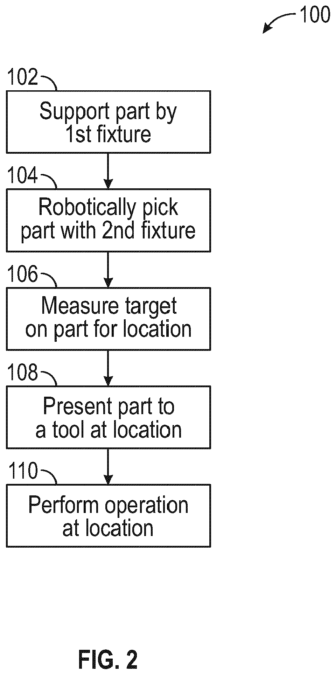

Figure 2 is a flowchart of the process for punching and/or welding a bumper facia.
Figure 3 illustrates a portion of an example system shown in Figure 1.
Figure 4 shows a first fixture supporting a bumper facia.

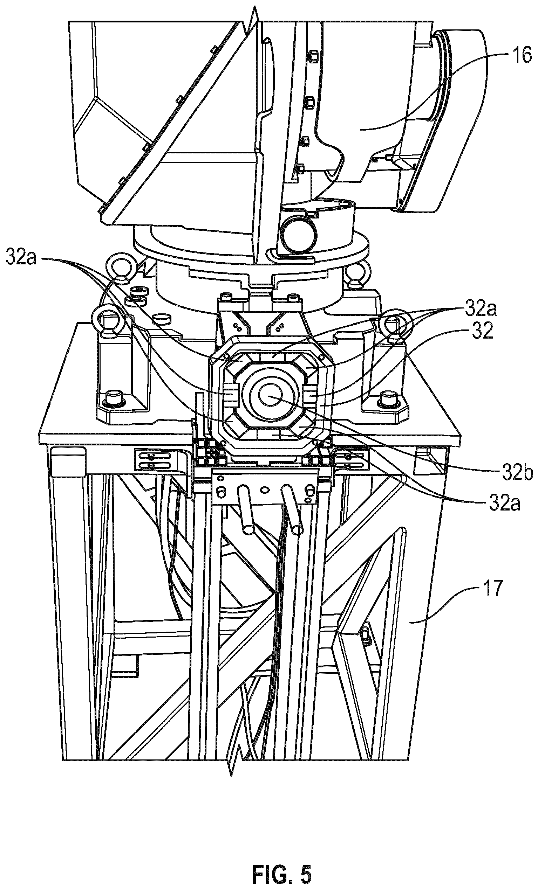

Figure 5 illustrates a sensor for detecting a target on the bumper facia.
Figures 6A-6D show a locating a second fixture having a holding assembly for the bumper facia.
Figure 7 depicts a B-side of a bumper facia having a target.

The embodiments, examples and alternatives of the preceding paragraphs, the claims, or the following description and drawings, including any of their various aspects or respective individual features, may be taken independently or in any combination. Features described in connection with one embodiment are applicable to all embodiments, unless such features are incompatible. Like reference numbers and designations in the various drawings indicate like elements.

### DETAILED DESCRIPTION

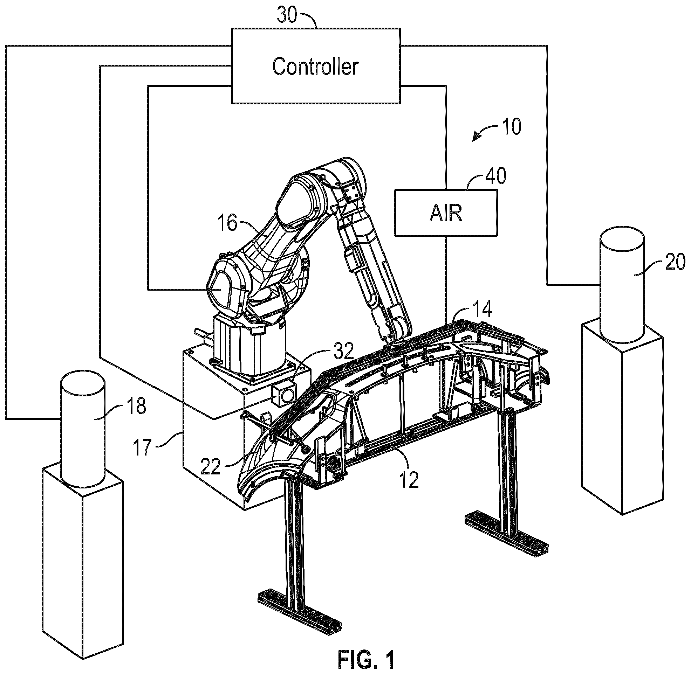

A system for a cell 10 is configured to perform an operation on a part 22, such as a bumper facia or other component (e.g., plastic component), is shown in Figure 1. The operation may include tooling that punches (e.g., by piercing mechanically or ultrasonically), ultrasonically welds, and/or glues. Other example operations include drilling, routering, placing, marking, applying material, laser cutting, burning etching, and surface treatment. The cell may include more than one tool, if desired, to reduce cycle times or perform different operations at the same cell (e.g., punch at one station and then weld at another station).

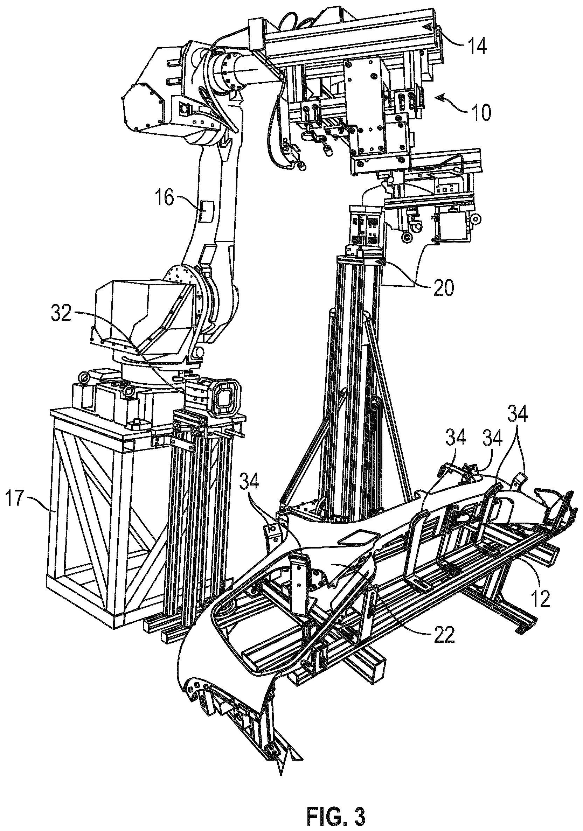

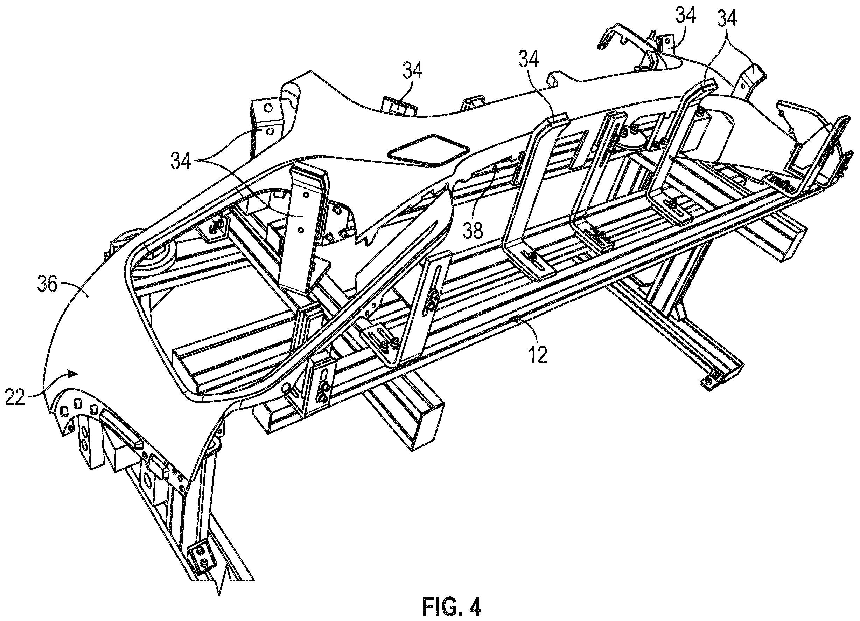

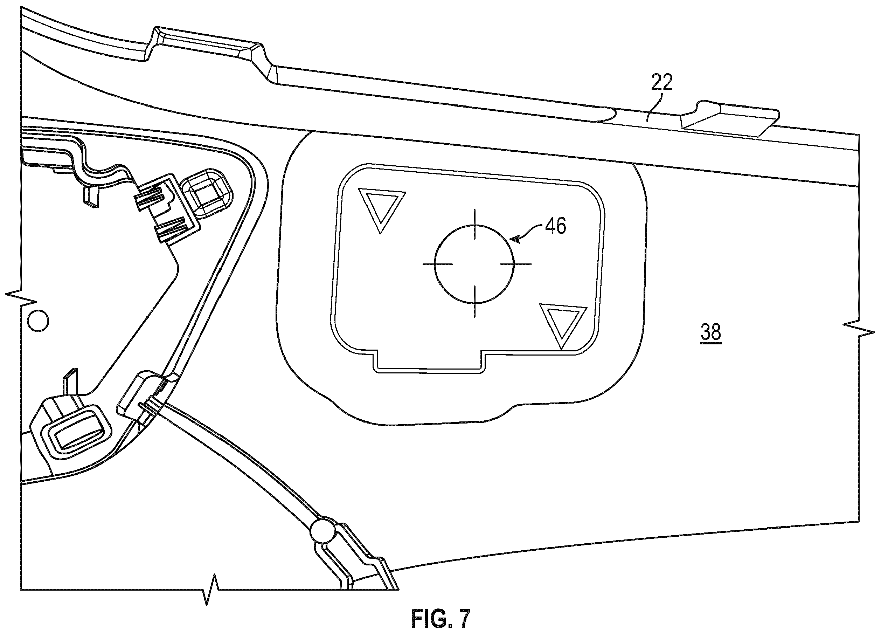

A first fixture 12 is provided in the cell to support one side of the part (e.g., facia) 22, for example, the B-side 38 (Fig. 7) of the part 22. Referring to Figures 3 and 4, the first fixture 12 has multiple guide brackets 24 that cooperate with the perimeter of the part 22 as it is manually loaded into the first fixture 12 by the operator. Returning to Figure 1, automated facia loading can also be used. Support structures or stops (not shown) are provided underneath the part 22 to abut the B-side 38 and positively locate the part 22 (which may be very flexible) for picking by a robot 16.

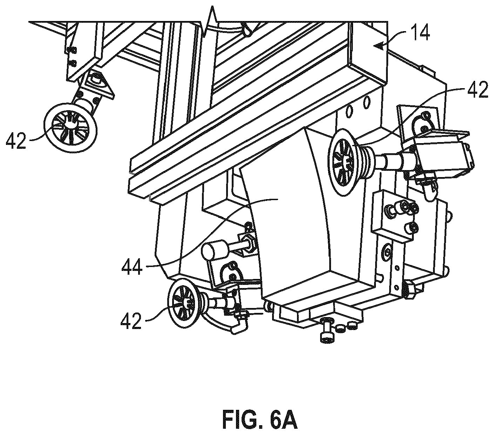

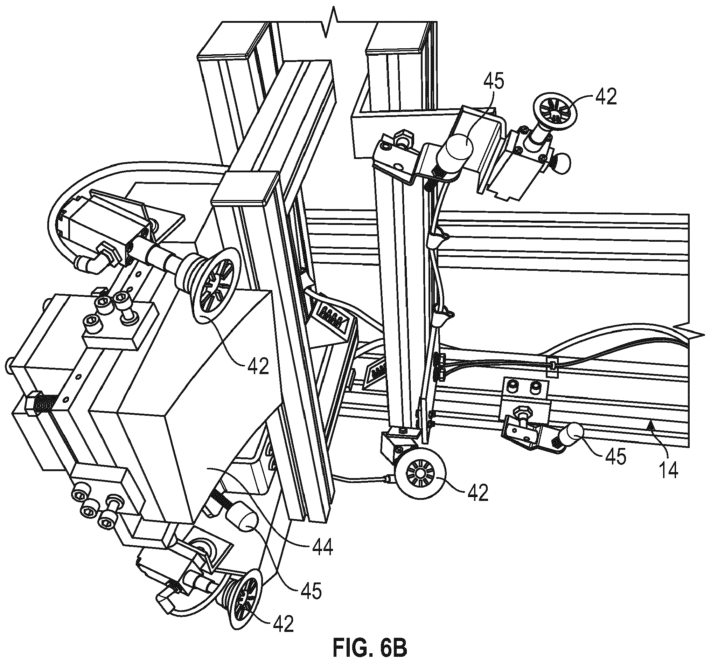

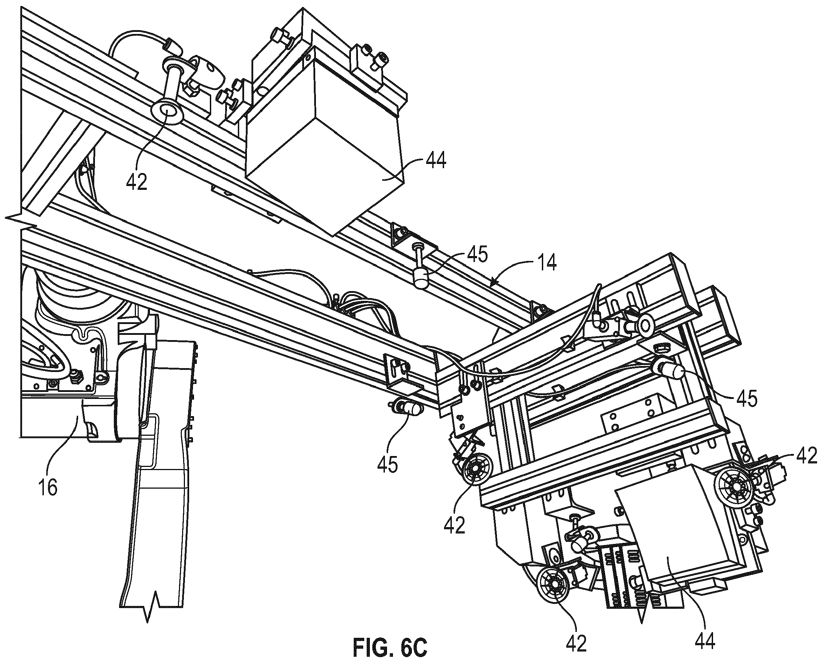

The cell 10 also includes a multi-axis robot 16 supported on a pedestal 17 and having a second fixture 14 mounted to an end effector, as shown in Figure 3. The second fixture 14 is configured to support an opposite side of the part 22, e.g., the A-side 36 (Fig. 4). In the example, shown in Figures 6A-6D, the second fixture 14 has suction cups 42 in communication with an air source 40 (Fig. 1) that apply a vacuum to the A-side 36 to pick up the part 22 from the first fixture 12. Stops 45 and locating brackets 44 positively locate the part 22, which would otherwise be quite flexible. As a result, the robot 16 can move the part 22 with precision about the cell 10.

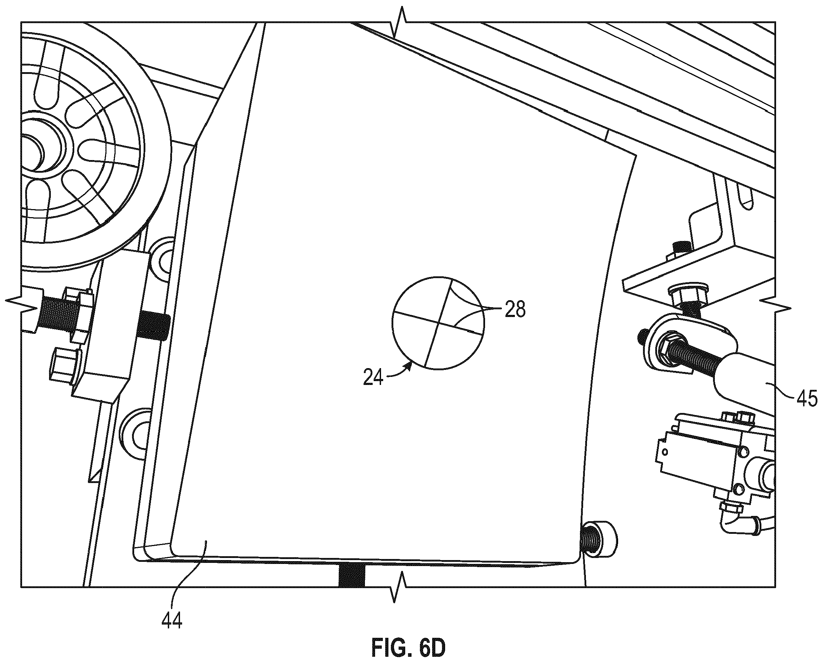

The first and second fixtures 12, 14 are made of relatively inexpensive, reconfigurable structural elements to create a framework for supporting the part 22. The supporting structures (e.g., guide brackets 34, stops 45, locating brackets 44, suction cups 42) can be easily moved about by providing different supporting flanges and/or by sliding the supporting structures in longitudinal slots in the structural elements to different positions. In the example, the stops on the first and second fixtures 12, 14 include surfaces shaped to match the contour of the part 22 adjacent to a location of a target 46 on the part 22 (Fig. 7). The locating brackets 44 on the second fixture may include targets 24 having cross-hairs 28 (Fig. 6D). These targets 24 are used to teach the robot 16 the x,y,z coordinate location of the first fixture 12 and its supporting brackets 44 during a typical robot calibration procedure that enables the robot 16 to repeatedly position the second fixture 14 to pick up the supported part 22. The location of any tools within the cell 10 are also taught to the robot 16 to establish their x,y,z coordinates within the workspace.

One of the part sides (e.g., B-side 38) has a target 46 (Fig. 7) indicating a location for the eventual operation. The target 46 corresponds to not only the x,y,z coordinate location where an operation such as punching or welding will be performed on the part 22, but the orientation of the target 46 (i.e., yaw, pitch, roll) must also be identified. Accurate identification of the target 46 in both x,y,z coordinates and its yaw, pitch, roll enables the robot 16 to precisely locate the part 22 with the respect to the punching tool 18 (or other tool), which has a preestablished location in the cell workspace.

A sensor 32, such as a circumferential array of lights 32a surrounding a camera 32b, is mounted to the pedestal 17 in proximity to a base of the robot 16, for example. The sensor 32 is used to measure the various targets 46 on the part 22. In one example, the camera is manufactured by Keyence (e.g., series CV-X/XG) and provides a 3-dimensional vision system capable of not only identifying the x,y,z coordinates of the target 46 and but also its orientation (via cross-hairs, for example) based upon the contour of the underlying surface (the yaw, pitch, roll of the target 46). However, it should be understood that any suitable pattern may be used for the target 46. Said another way, the target 46 needs to be found in three dimensions (x,y,z; yaw, pitch, roll) in order to align the tool to the proper tool reaction orientation, (or in the case of punching in the proper draft angle of the punch)because almost always the parts are not flat.

Referring to Figure 1, in operation, the cell 10 is calibrated to provide x,y,z locations of the fixtures and tools to the robot 16 so that the second fixture 14 can be accurately moved through the workspaces, which is a known robot cell set up technique. Subsequent to calibration, a part 22 is loaded into the first fixture 12 by an operator. A controller 30 is configured to command and move the robot 16 to pick up the part 22 from the first fixture 12 using the second fixture 14. The robot 16 present the targets 46 to the camera 32 one-by-one for measuring the target locations by manipulating the second fixture 14 so all the B-side targets are visible to the camera. with the part to the tool based upon the measurement.

The target 46 is arranged on a curved surface and includes a pattern. The sensor 32 is configured to measure characteristics of the curved surface using the target 46. In one example, the pattern is raised (e.g., 0.5 mm) with respect to an immediately adjacent surface. In the example, the pattern is cross-hairs indicating the precise x,y,z location in 3-dimensional space for the operation. By measuring each target within three dimensions, including z and its yaw, pitch, roll, this allows for a calculation of the precise location on the target 46 within the cell's workspace in order to place the part 22 in the gripper to the robot 16 to be presented to another potential tool (in this case a punch 20) to do a high precision action in three dimensions. Each individual "targeting process" results in a different calculation to perform an action, i.e., even though there is one part, each target is treated as its own function.

In one example, in order to provide sufficiently accurate identification of the target, the sensor 32 includes an array of light sources 32a oriented at different angles that permits the various surfaces of the target 46 to be better illuminated for the camera 32b. A grid pattern may also be shined upon the target using the lights 32a, which better reveals the 3D contours of the target 46 on the compound curvature of the part. Since the lights 32a project a grid pattern at different angles with a single camera capturing them, a highly accurate 3D image can be made, giving x,y,z and yaw, pitch, and roll in the workspace.

The target image capturing approach described above enables the sensor to concentrate on a smaller area of the part in order to identify the target, which reduces cycle time. That is, much more contour data was required, which still provided poor results. Other image capturing approach uses 2D technology that has proven inaccurate, because it will not give x,y,z, yaw, pitch and roll of the part location, and this technology is highly influenced by ambient light. Other 3D scanning technology attempted, requires a larger area to determine part contours to calculate part location in 3D relative to Robot universal coordinates, thus estimating target location, however this process requires a large area to be scanned and has not proved to be reliable. In addition, these parts tend to be manufactured in a material (very flexible plastic) susceptible to inconsistency in tolerance due to factors such as humidity and heat, adding to the lack of reliability.

The controller is configured to command the robot 16 to present the part 22 to the tool (e.g. punch 18 or welder 20) at x,y,z and an orientation (yaw, pitch, roll) corresponding to the characteristics of the curved surface. Typically, the part 22 includes multiple targets each having different curved surfaces with different characteristics (e.g., multiple ultrasonic parking sensor locations on a bumper facia). The tool is configured to perform the operation at the location.

It should also be understood that although a particular component arrangement is disclosed in the illustrated embodiment, other arrangements will benefit herefrom. Although particular step sequences are shown, described, and claimed, it should be understood that steps may be performed in any order, separated or combined unless otherwise indicated and will still benefit from the present invention.

Although the different examples have specific components shown in the illustrations, embodiments of this invention are not limited to those particular combinations. It is possible to use some of the components or features from one of the examples in combination with features or components from another one of the examples.

Although an example embodiment has been disclosed, a worker of ordinary skill in this art would recognize that certain modifications would come within the scope of the claims. For that reason, the following claims should be studied to determine their true scope and content.

## Claims

1. A system for performing an operation on a part (22), comprising
a first fixture (12) configured to support one side of a part (22);
a robot (16) having a second fixture (14) configured to support an opposite side of the part (22) with respect to the one side, wherein one of the part sides has a target (46) on a surface indicating a location for the operation;
a sensor (32) configured to measure the target in 3-dimensional space;
a tool (18) configured to perform the operation at the location; and
a controller (30) configured move the robot (16) to pick up the part (22) from the first fixture (12) using the second fixture (14), the controller (30) configured to present the target (46) to the sensor (32) for measuring the x,y,z coordinates and the yaw, pitch and roll of the target (46), and the controller (30) configured to move the second fixture (14) with the part (22) to the tool (18) based upon the measurement.

2. The system of claim 1, wherein the one side is a B-side (38) of the part (22), the opposite side is the A-side (36) of the part (22), and the target is located on the B-side (38).

3. The system of claim 2, wherein the first fixture (12) includes multiple guide brackets (24) configured to cooperate with a perimeter of the part (22) to guide the part (22) onto support structure, the support structure is arranged beneath the target.

4. The system of claim 2 or 3, wherein the second fixture (14) includes suction cups (42) configured to selectively attach to the A-side (36).

5. The system of any one of claims 1 to 4, wherein the sensor (32) is arranged in proximity to a base of the robot (16).

6. The system of any one of claims 1 to 5, wherein the sensor (32) includes a camera (32b) and multiple lights (32a) arranged at different angles in relation to the target (46).

7. The system of any one of claims 1 to 6, wherein the target (46) includes a pattern raised with respect to an immediately adjacent surface, and optionally wherein the pattern is cross-hairs indicating the location.

8. The system of claim 6, wherein the controller (30) is configured to present the part (22) to the tool (18) at an orientation corresponding to the yaw, pitch and roll of the target (46).

9. The system of claim 8, wherein the part (22) includes multiple targets (46) each having different curved surfaces with different characteristics.

10. The system of claim 9, wherein the controller (30) is configured to present each of the targets (46) to the sensor (32) for measurement of the characteristics, and optionally wherein the controller (30) is configured to present the multiple targets (46) to the tool (18) for performing the operation.

11. The system of any one of claims 1 to 10, wherein at least one of:
the tool (18) is one of a punching tool and a welding tool,
the sensor (32) includes a camera (32b), and
the part (22) is a bumper facia.

12. A method of performing an operation on a part (22), comprising:
supporting a part in a first fixture (12);
robotically picking up the part with a second fixture (14);
measuring a target (46) on a curved surface of the part to determine a location of the target (46) in 3-dimensional space, the target measuring step including determining the x,y,z coordinates and the yaw, pitch and roll of the target (46);
presenting the part (22) to a tool (18) at an orientation corresponding to the measured location of the target (46); and
performing an operation at the location.

13. The method of claim 12, wherein the robotically picking step includes suctioning a side of the part (22) opposite the side with the target (46).

14. The method of claim 12 or 13, wherein the measuring step includes robotically presenting the target (46) to a camera (32b), and optionally wherein part (22) has multiple targets (46), and the measuring step includes presenting the multiple targets (46) to the camera (32b), and performing step includes performing the operation and the location corresponding to each of the multiple targets (46).

15. The method of any one of claims 12 to 14, wherein the operation is one of punching or welding.
